(19) Europäisches Patentamt
European Patent Office
Office européen des brevets

(11) EP 4 276 130 A1

(12) EUROPEAN PATENT APPLICATION

(43) Date of publication:
**15.11.2023 Bulletin 2023/46**

(21) Application number: **23183666.9**

(22) Date of filing: **23.02.2018**

(51) International Patent Classification (IPC):
***C08G 63/181*** *(2006.01)* ***C08G 63/668*** *(2006.01)*
***C08G 63/672*** *(2006.01)* ***C08G 63/85*** *(2006.01)*

(52) Cooperative Patent Classification (CPC):
**C08G 63/672; C08G 63/181; C08G 63/668; C08G 63/85**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2017 US 201762462950 P**

(62) Document number(s) of the earlier application(s) in accordance with Art. 76 EPC:
**18709875.1 / 3 585 828**

(71) Applicant: **Covation Inc.**
**Newark, Delaware 19713 (US)**

(72) Inventors:
- **SUNKARA, Hari Babu**
**Hockessin, 19707 (US)**
- **PIGLIACAMPI, Paul J.**
**Pennslyvania, 19317 (US)**

(74) Representative: **Mewburn Ellis LLP**
**Aurora Building**
**Counterslip**
**Bristol BS1 6BX (GB)**

Remarks:
•This application was filed on 05-07-2023 as a divisional application to the application mentioned under INID code 62.
•Claims filed after the date of receipt of the divisional application (Rule 68(4) EPC).

# (54) PROCESS FOR PREPARING POLY(ALKYLENE FURANDICARBOXYLATE)

(57) A process to prepare poly(alkylene furandicarboxylate) polymer is disclosed herein. In one embodiment, the process comprises a) contacting a mixture comprising furandicarboxylic acid dialkyl ester, a diol comprising ethylene glycol, 1,3-propanediol,1,4-butanediol, 1,4-cyclohexanedimethanol, or mixtures thereof, and a metal catalyst at a temperature in the range of from about 140°C to about 220°C to form prepolymer, wherein the mole ratio of the furandicarboxylic acid dialkyl ester to the diol is in the range of from 1:1.3 to 1 :2.2; b) performing polycondensation by heating the prepolymer under reduced pressure to a temperature in the range of from about 220°C to about 260°C to form poly(alkylene furan dicarboxylate) polymer; wherein the rate of polycondensation in step c) is faster with the anthraquinone compound present than without; and c) adding at least one anthraquinone compound as disclosed herein; and

EP 4 276 130 A1

## Description

### CROSS-REFERENCE TO RELATED APPLICATIONS

The present application claims priority to U.S. Provisional Patent Application Serial No. 62/462,950, filed February 24, 2017, which is hereby incorporated by reference in its entirety.

### FIELD OF THE DISCLOSURE

The disclosure herein relates to processes for making poly(alkylene furandicarboxylate), such as poly(trimethylene furandicarboxylate), in the presence of a metal catalyst and at least one anthraquinone compound.

### BACKGROUND

Polyesters are an important class of industrially significant polymers. Polyesters find uses in many industries, including apparel, carpets, packaging films, paints, electronics, and transportation. Typically, polyesters are produced by the condensation of one or more diacids or esters thereof with one or more diols, wherein the starting materials are derived from petroleum.

Poly(trimethylene furandicarboxylate) (PTF) is an important new polymer, wherein the starting materials furan dicarboxylic acid or an ester thereof and 1,3-propanediol can be produced from biomass feedstock. The furan dicarboxylic acid (FDCA) can be produced from the oxidation of hydroxymethyl furfural (which is readily available from a number of sources, for example, biomass and/or high fructose corn syrup) and 1,3-propanediol can be produced by the fermentation of sugar. Both of these materials are renewable materials that are beginning to be produced in industrially significant amounts.

While PTF can be made from 100% renewable materials, the production of the polymer has presented significant challenges. For example, the titanium catalysts typically used in transesterification and polycondensation to produce PTF can also produce impurities which can impart an undesirable yellow color to the PTF.

Processes to prepare poly(alkylene furandicarboxylate) polymers having less color are needed. In addition, there is a need to produce melt polymers under mild conditions without sacrificing the productivity while maintaining the quality high.

### SUMMARY

Disclosed herein are processes to prepare poly(alkylene furandicarboxylate) polymers, and polymers produced by such processes. In one embodiment a process is disclosed, the process comprising the steps:

a) contacting a mixture comprising furandicarboxylic acid dialkyl ester, a diol comprising ethylene glycol, 1,3-propanediol, 1,4-butanediol, 1,4-cyclohexanedimethanol, or mixtures thereof, and a metal catalyst at a temperature in the range of from about 140°C to about 220°C to form prepolymer,
wherein the mole ratio of the furandicarboxylic acid dialkyl ester to the diol is in the range of from 1:1.3 to 1:2.2;
b) performing polycondensation by heating the prepolymer under reduced pressure to a temperature in the range of from about 220°C to about 260°C to form poly(alkylene furandicarboxylate) polymer;
c) independently adding to step a) and/or step b) at least one anthraquinone compound represented by Structure A

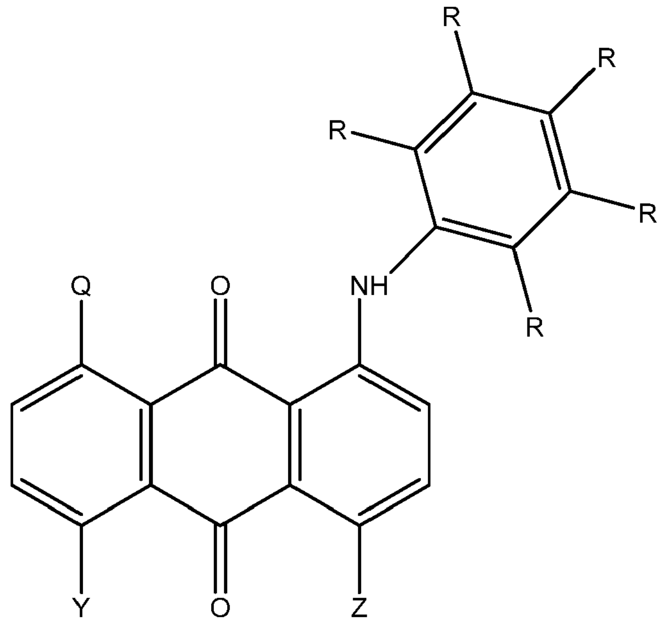

Structure A

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', wherein R' is cyclohexyl or substituted aryl; and

wherein the rate of polycondensation in step c) is faster with the anthraquinone compound present than without.

In one embodiment, the anthraquinone compound is added in step a) contacting the mixture. In another embodiment, the anthraquinone compound is present in the mixture in a concentration in the range of from about 1 ppm to about 20 ppm, based on the total weight of the polymer. In a further embodiment, the anthraquinone compound is added in step b) performing polycondensation. In yet another embodiment, the anthraquinone compound is present in the prepolymer in a concentration in the range of from about 1 ppm to about 20 ppm, based on the total weight of the polymer. In one additional embodiment, the anthraquinone compound is 1,4-bis[(2,4,6-trimethylphenyl)amino]anthracene-9,10-dione.

In one embodiment, the furandicarboxylic acid dialkyl ester is 2,5-furandicarboxylate dimethyl ester. In another embodiment, the diol is 1,3-propanediol and the poly(alkylene furandicarboxylate) polymer is poly(trimethylene furandicarboxylate). In another embodiment, the diol is ethylene glycol and the poly(alkylene furandicarboxylate) polymer is poly(ethylene furandicarboxylate). In another embodiment, the diol is 1,4-butanediol and the poly(alkylene furandicarboxylate) polymer is poly(butylene furandicarboxylate).

In one embodiment, the process further comprises the step:

d) crystallizing the poly(alkylene furandicarboxylate) polymer obtained from step c) at a temperature in the range of from about 100 °C to about 150 °C to obtain crystallized poly(alkylene furandicarboxylate) polymer.

In another embodiment, the process further comprises the step:

e) polymerizing the crystallized poly(alkylene furandicarboxylate) polymer in the solid state at a temperature 5-25 °C below the melting point of the polymer. In an additional embodiment, an anthraquinone compound of Structure A is added in step d) polymerizing in the solid state.

## DETAILED DESCRIPTION

All patents, patent applications, and publications cited herein are incorporated herein by reference in their entirety.

As used herein, the term "embodiment" or "disclosure" is not meant to be limiting, but applies generally to any of the embodiments defined in the claims or described herein. These terms are used interchangeably herein.

In this disclosure, a number of terms and abbreviations are used. The following definitions apply unless specifically stated otherwise.

The articles "a", "an", and "the" preceding an element or component are intended to be nonrestrictive regarding the number of instances (i.e. occurrences) of the element or component. There "a", "an", and "the" should be read to

include one or at least one, and the singular word form of the element or component also includes the plural unless the number is obviously meant to be singular.

The term "comprising" means the presence of the stated features, integers, steps, or components as referred to in the claims, but that it does not preclude the presence or addition of one or more other features, integers, steps, components, or groups thereof. The term "comprising" is intended to include embodiments encompassed by the terms "consisting essentially of" and "consisting of". Similarly, the term "consisting essentially of" is intended to include embodiments encompassed by the term "consisting of".

Where present, all ranges are inclusive and combinable. For example, when a range of "1 to 5" is recited, the recited range should be construed as including ranges "1 to 4", "1 to 3", 1-2", "1-2 and 4-5", "1-3 and 5", and the like.

As used herein in connection with a numerical value, the term "about" refers to a range of +/- 0.5 of the numerical value, unless the term is otherwise specifically defined in context. For instance, the phrase a "pH value of about 6" refers to pH values of from 5.5 to 6.5, unless the pH value is specifically defined otherwise.

It is intended that every maximum numerical limitation given throughout this Specification includes every lower numerical limitation, as if such lower numerical limitations were expressly written herein. Every minimum numerical limitation given throughout this Specification will include every higher numerical limitation, as if such higher numerical limitations were expressly written herein. Every numerical range given throughout this Specification will include every narrower numerical range that falls within such broader numerical range, as if such narrower numerical ranges were all expressly written herein.

The features and advantages of the present disclosure will be more readily understood, by those of ordinary skill in the art from reading the following detailed description. It is to be appreciated that certain features of the disclosure, which are, for clarity, described above and below in the context of separate embodiments, may also be provided in combination in a single element. Conversely, various features of the disclosure that are, for brevity, described in the context of a single embodiment, may also be provided separately or in any sub-combination. In addition, references to the singular may also include the plural (for example, "a" and "an" may refer to one or more) unless the context specifically states otherwise.

The use of numerical values in the various ranges specified in this application, unless expressly indicated otherwise, are stated as approximations as though the minimum and maximum values within the stated ranges were both proceeded by the word "about". In this manner, slight variations above and below the stated ranges can be used to achieve substantially the same results as values within the ranges. Also, the disclosure of these ranges is intended as a continuous range including each and every value between the minimum and maximum values.

As used herein:

The phrase "poly(trimethylene furandicarboxylate)" or PTF means a polymer comprising repeat units derived from 1,3-propanediol and furan dicarboxylic acid or diester. In some embodiments, the poly(trimethylene furandicarboxylate) comprises greater than or equal to 95 mole% of repeat units derived from 1,3-propanediol and furan dicarboxylic acid. In still further embodiments, the mole% of the 1,3-propanediol and furan dicarboxylic acid repeat units is greater than or equal to 95 or 96 or 97 or 98 or 99 mole%, wherein the mole percentages are based on the total amount of monomers that form the poly(trimethylene furandicarboxylate). In some embodiments, the furan dicarboxylic acid is 2,3-furan dicarboxylic acid, 2,4-furan dicarboxylic acid, 2,5-furan dicarboxylic acid, or a combination thereof. In other embodiments, the furan dicarboxylic acid is 2,5-furan dicarboxylic acid.

The term "trimethylene furandicarboxylate repeat unit" means a polymer having as the repeating unit a structure consisting of alternating furandicarboxylate and $-CH_2CH_2CH_2O-$ groups, wherein "furandicarboxylate" encompasses furan-2,3-dicarboxylate, furan-2,4-dicarboxylate, and furan-2,5-dicarboxylate. The molecular weight of this repeat unit is 196 g/mole. The term "trimethylene furan-2,5-dicarboxylate repeat unit" means a polymer having as the repeating unit a structure consisting of alternating furan-2,5-dicarboxylate and $-CH_2CH_2CH_2O-$groups, according to Formula (I):

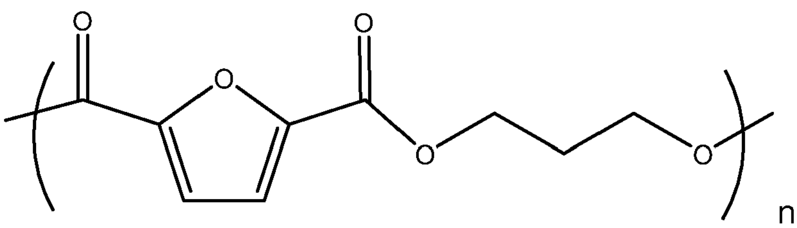

Formula (I).

Similarly, the term "trimethylene furan-2,4-dicarboxylate repeat unit" means a polymer having as the repeating unit a structure consisting of alternating furan-2,4-dicarboxylate and $-CH_2CH_2CH_2O-$ groups, and the term "trimethylene furan-2,3-dicarboxylate repeat unit" means a polymer having as the repeating unit a structure consisting of alternating furan-2,3-dicarboxylate and $-CH_2CH_2CH_2O-$ groups. The value of n (the number of repeat units) can be for example 10 to 1000, or 50-500 or 25-185, or 80-185.

The phrase "polyethylene furandicarboxylate)" or PEF means a polymer comprising repeat units derived from 1,2-ethanediol (ethylene glycol) and furan dicarboxylic acid or furan dicarboxylic acid ester. In some embodiments, the furan dicarboxylic acid is 2,3-furan dicarboxylic acid, 2,4-furan dicarboxylic acid, 2,5-furan dicarboxylic acid, or a combination thereof. In other embodiments, the furan dicarboxylic acid is 2,5-furan dicarboxylic acid. In other embodiments, the furan dicarboxylic acid ester is 2,5-furandicarboxylic dimethyl ester.

The phrase "poly(butylene furandicarboxylate)" or PBF means a polymer comprising repeat units derived from 1,4-butanediol and furan dicarboxylic acid or furan dicarboxylic acid ester. In some embodiments, the furan dicarboxylic acid is 2,3-furan dicarboxylic acid, 2,4-furan dicarboxylic acid, 2,5-furan dicarboxylic acid, or a combination thereof. In other embodiments, the furan dicarboxylic acid is 2,5-furan dicarboxylic acid. In other embodiments, the furan dicarboxylic acid ester is 2,5-furandicarboxylic dimethyl ester.

The phrase "poly(cyclohexyl furandicarboxylate)" means a polymer comprising repeat units derived from 1,4-cyclohexanedimethanol and furan dicarboxylic acid or furan dicarboxylic acid ester. In some embodiments, the furan dicarboxylic acid is 2,3-furan dicarboxylic acid, 2,4-furan dicarboxylic acid, 2,5-furan dicarboxylic acid, or a combination thereof. In other embodiments, the furan dicarboxylic acid is 2,5-furan dicarboxylic acid. In other embodiments, the furan dicarboxylic acid ester is 2,5-furandicarboxylic dimethyl ester.

The phrase "poly(alkylene furandicarboxylate)" means a polymer comprising repeat units derived from an alkylene diol and furan dicarboxylic acid or furan dicarboxylic acid ester. The alkylene diol can include, for example, ethylene glycol, 1,3-propanediol, 1,4-butanediol, and 1,4-cyclohexanedimethanol.

Depending upon the number of repeat units in the polymer, the intrinsic viscosity can vary.

The phrases "polymer backbone" and "main chain of polymer" are used interchangeably herein and mean two or more monomer units linked covalently together create a continuous chain of polymer.

The phrase "end group" as used herein means a reactive or unreactive functional group present at an end of the polymer backbone.

The phrase "di-propanediol" or "di-PDO" repeat unit or end group of a polymer means a unit having a structure according to Formula (II):

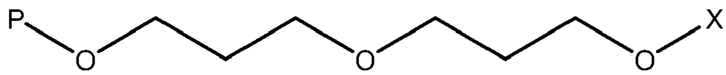

Formula (II)

wherein P is the poly(trimethylene furandicarboxylate) and X is P or hydrogen. The di-PDO group can be an end group wherein X is hydrogen, or the di-PDO group can be a repeat unit within the polymer backbone wherein X is P. Analogous diether glycols can also be formed when the repeat unit of Formula (I) contains a $-(CH_2CH_2O)_2-$ or $-(CH_2CH_2CH_2CH_2O)_2-$ moiety in place of the $-(CH_2CH_2CH_2O)_2-$ moiety.

The phrase "allyl end group" means an allyl group at the end of a poly(trimethylene furandicarboxylate) polymer, for example according to Formula (III):

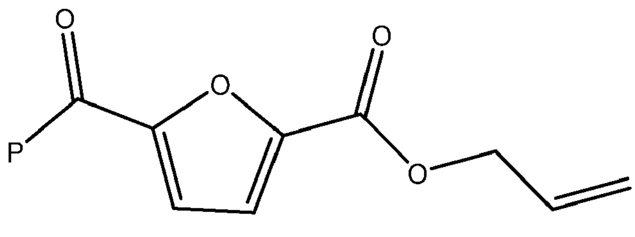

Formula (III)

wherein P represents the poly(trimethylene furandicarboxylate) polymer.

The phrase "alkyl ester end group" means an alkyl ester group at the end of a poly(alkylene furandicarboxylate) polymer. In some embodiments, the alkyl end group can be methyl, ethyl, propyl, or butyl.

The phrase "carboxylic acid end groups" means a carboxylic acid group at the end of a poly(alkylene furandicarboxylate) polymer.

The phrase "decarboxyl end groups" means the furan ring at the end of a poly(alkylene furandicarboxylate)

polymer has no carboxylic acid group.

The phrase "cyclic oligoester" of PTF means a cyclic compound composed of from two to eight repeating units of a structure according to Formula (I). The phrase "cyclic dimer oligoester" of PTF means a dimer having a structure according to Formula (IV):

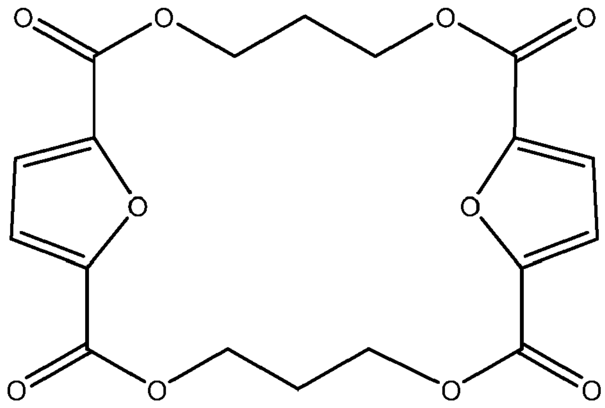

Formula (IV).

Other cyclic oligoesters include trimers, tetramers, pentamers, hexamers, heptamers, and octamers of the repeat unit of Formula (I). Analogous cyclic oligoesters can also be formed when the repeat unit of Formula (I) contains a $-CH_2CH_2-$ or $-CH_2CH_2CH_2CH_2-$ moiety in place of the $-CH_2CH_2CH_2-$ moiety.

The phrase "furan dicarboxylic acid" encompasses 2,3-furan dicarboxylic acid; 2,4-furan dicarboxylic acid; and 2,5-furan dicarboxylic acid. In one embodiment, the furan dicarboxylic acid is 2,3-furan dicarboxylic acid. In one embodiment, the furan dicarboxylic acid is 2,4-furan dicarboxylic acid. In one embodiment, the furan dicarboxylic acid is 2,5-furan dicarboxylic acid.

The phrase "furandicarboxylate dialkyl ester" means a dialkyl ester of furan dicarboxylic acid. In some embodiments, the furandicarboxylate dialkyl ester can have a structure according to Formula (V):

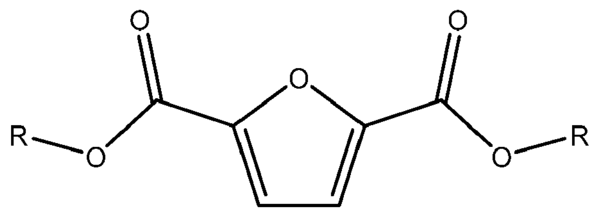

Formula (V)

wherein each R is independently $C_1$ to $C_8$ alkyl. In some embodiments, each R is independently methyl, ethyl, or propyl. In another embodiment, each R is methyl, and the furan dicarboxylate dialkyl ester is 2,5-furan dicarboxylic dimethyl ester (FDME). In yet another embodiment, each R is ethyl, and the furan dicarboxylate dialkyl ester is 2,5-furan dicarboxylic diethyl ester.

The terms "a* value", "b* value", and "L* value" mean a color according to CIE L*a*b* color space. The a* value represents the degree of red color (positive values) or the degree of green color (negative values). The b* value indicates the degree of yellow color (positive values) or the degree of blue color (negative values). The L* value represents the lightness of the color space wherein 0 indicates a black color and 100 refers to a diffuse white color. The degree of yellowness of the polymer is also represented by Yellowness Index (YI) - the higher the YI value, the more yellow color.

The term "prepolymer" means relatively low molecular weight compounds or oligomers having at least one alkylene furandicarboxylate repeat unit, for bis(1,3-propanediol)furandicarboxylate in the case of poly(trimethylene furandicarboxylate). Typically, prepolymer has a molecular weight in the range of from about 196 to about 6000 g/mole. The smallest prepolymer will generally contain two diol moieties with a furandicarboxylate group between them while the largest may have in the range of from 2 to 30 alkylene furandicarboxylate repeat units.

As used herein, "weight average molecular weight" or "$M_w$" is calculated as

$M_w = \Sigma N_i M_i^2 / \Sigma N_i M_i$; where $M_i$ is the molecular weight of a chain and $N_i$ is the number of chains of that molecular weight. The weight average molecular weight can be determined by techniques such as gas chromatography (GC), high pressure liquid chromatography (HPLC), and gel permeation chromatography (GPC).

As used herein, "number average molecular weight" or "$M_n$" refers to the statistical average molecular weight of all the polymer chains in a sample. The number average molecular weight is calculated as $M_n = \Sigma N_i M_i / \Sigma N_i$ where $M_i$ is the molecular weight of a chain and $N_i$ is the number of chains of that molecular weight. The number average molecular weight of a polymer can be determined by techniques such as gel permeation chromatography, viscometry via the (Mark-Houwink equation), and colligative methods such as vapor pressure osmometry, end-group determination, or proton NMR.

In some embodiments, the disclosure relates to a process comprising the steps:

a) contacting a mixture comprising furandicarboxylic acid dialkyl ester, a diol comprising ethylene glycol, 1,3-propanediol, 1,4-butanediol, 1,4-cyclohexanedimethanol, or mixtures thereof, and a metal catalyst, at a temperature in the range of from about 140°C to about 220°C to form prepolymer,
wherein the mole ratio of the furandicarboxylic acid dialkyl ester to the diol is in the range of from 1:1.3 to 1:2.2; and
b) performing polycondensation by heating the prepolymer under reduced pressure to a temperature in the range of from about 220°C to about 260°C to form poly(alkylene furandicarboxylate) polymer; and
c) independently adding to step a) and/or step b) at least one anthraquinone compound represented by Structure A

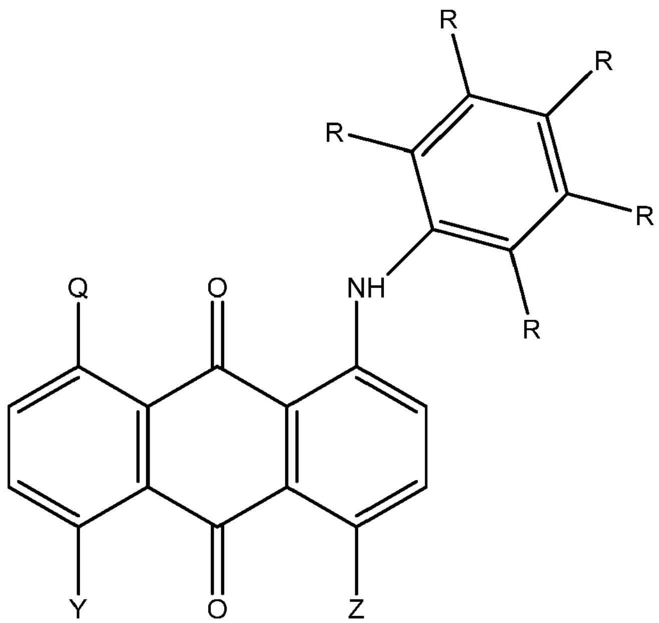

Structure A

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', wherein R' is cyclohexyl or substituted aryl; and
wherein the rate of polycondensation in step c) is faster with the anthraquinone compound present than without.

In one embodiment, the furandicarboxylic acid dialkyl ester is 2,5-furandicarboxylate dimethyl ester. In another embodiment, the diol is 1,3-propanediol and the poly(alkylene furandicarboxylate) polymer is poly(trimethylene furandicarboxylate). In yet another embodiment, the diol is ethylene glycol and the poly(alkylene furandicarboxylate) polymer is poly(ethylene furandicarboxylate). In a further embodiment, the diol is 1,4-butanediol and the poly(alkylene furandicarboxylate) polymer is poly(butylene furandicarboxylate).

In one embodiment, in step a) of the process a mixture consisting of, or consisting essentially of, furandicarboxylic acid dialkyl ester, a diol comprising ethylene glycol, 1,3-propanediol, 1,4-butanediol, 1,4-cyclohexanedimethanol, or mixtures thereof, and a metal catalyst is contacted at a temperature in the range of from 140°C to 220°C to form a prepolymer. By "consisting essentially of" is meant that less or equal to 1% by weight of other diester, diacid, or polyol

monomers, that are not the furan dicarboxylate ester or specified diol, are present in the mixture. In other embodiments, the mixture contacted in the first step is free from or essentially free from acid functional components, for example, acid functional monomers such as furandicarboxylic acid. As used herein, "essentially free from" means that the mixture comprises less than 5% by weight of acid functional monomers, based on the total weight of monomers in the mixture. In other embodiments, the amount of acid functional monomers is less than 4% or 3% or 2% or 1% or the amount of acid functional monomers is 0%. It has been found that the presence of acids during the polymerization process can lead to increased color in the final poly(alkylene furandicarboxylate), therefore, the amount of acid should be kept as low as possible.

The furandicarboxylic acid dialkyl ester can be any of the diesters known, for example, furandicarboxylic acid dialkyl esters having from 1 to 8 carbon atoms in the ester group. The term "furandicarboxylic acid dialkyl ester" is used interchangeably herein with the term "furandicarboxylate dialkyl ester". In some embodiments, the furandicarboxylate dialkyl esters are furandicarboxylate dimethyl ester, furandicarboxylate diethyl ester, furandicarboxylate dipropyl ester, furandicarboxylate dibutyl ester, furandicarboxylate dipentyl ester, furandicarboxylate dihexyl ester, furandicarboxylate diheptyl ester, furandicarboxylate dioctyl ester or a combination thereof. In other embodiments, the furandicarboxylate dialkyl esters are furandicarboxylate dimethyl ester, furandicarboxylate diethyl ester, or a mixture of furandicarboxylate dimethyl ester and furandicarboxylate diethyl ester. The ester groups of the furandicarboxylate dialkyl esters can be positioned at the 2,3-, 2,4- or 2,5-positions of the furan ring. In some embodiments, the furandicarboxylate dialkyl ester is 2,3-furandicarboxylate dialkyl ester; 2,4-furandicarboxylate dialkyl ester; 2,5-furandicarboxylate dialkyl ester; or a mixture thereof. In still further embodiments, the furandicarboxylate dialkyl ester is 2,5-furandicarboxylate dialkyl ester, while in still further embodiments, it is 2,5-furandicarboxylate dimethyl ester.

In the contacting step, the mole ratio of the furandicarboxylic acid dialkyl ester to the diol is in the range of from 1:1.3 to 1:2.2. In other words, for every 1 mole of furandicarboxylic acid dialkyl ester, at least 1.3 moles and up to 2.2 moles of diol can be used. In principle, more than 2.2 moles of diol can be used for every 1 mole of furandicarboxylic acid dialkyl ester, however, more than 2.2 moles of diol provides little benefit and can increase the amount of time and energy required to remove at least a portion of the unreacted diol. In other embodiments, the mole ratio of the furandicarboxylic acid dialkyl ester to the diol can be in the range of from 1:1.3 up to 1:2.1, or from 1:1.3 to 1:2.0. In still further embodiments, the ratio of the furandicarboxylic acid dialkyl ester to the diol can be in the range of from 1:1.4 up to 1:1.8 or from 1:1.5 up to 1:1.8.

At least one metal catalyst is present in the contacting step. The amount of metal in the metal catalyst is in the range of from 20 parts per million (ppm) to 400 ppm by weight, based on a theoretical yield of 100% of the polymer produced. In other embodiments, the amount of metal catalyst present in the contacting step can be in the range of from 25 to 250 ppm, or from 30 to 200 ppm, or from 20 to 200 ppm, or from 40 to 150 ppm, or from 50 to 100 ppm, wherein the concentration (parts per million), is based on the total weight of the polymer. In one embodiment, the metal catalyst is present in the mixture in a concentration in the range of from about 20 ppm to about 300 ppm, based on the total weight of the polymer. Suitable metal catalysts can include, for example, titanium compounds, bismuth compounds such as bismuth oxide, germanium compounds such as germanium dioxide, zirconium compounds such as tetraalkyl zirconates, tin compounds such as butyl stannoic acid, tin oxides and alkyl tins, antimony compounds such as antimony trioxide and antimony triacetate, aluminum compounds such as aluminum carboxylates and alkoxides, inorganic acid salts of aluminum, cobalt compounds such cobalt acetate, manganese compounds such as manganese acetate, or a combination thereof. Alternatively, the catalyst can be a tetraalkyl titanate $Ti(OR)_4$, for example tetraisopropyl titanate, tetra-n-butyl titanate, tetrakis(2-ethylhexyl) titanate, titanium chelates such as, acetylacetonate titanate, ethyl acetoacetate titanate, triethanolamine titanate, lactic acid titanate, or a combination thereof. In one embodiment, the metal catalyst comprises at least one titanium, bismuth, zirconium, tin, antimony, germanium, aluminum, cobalt, magnesium, or manganese compound. In one embodiment, the metal catalyst comprises at least one titanium compound. Suitable metal catalysts can be obtained commercially or prepared by known methods.

During the contacting step a), the furandicarboxylic acid dialkyl ester is transesterified with the diol resulting in the formation of the bis(diol) furandicarboxylate prepolymer and an alkyl alcohol corresponding to the alcohol of the ester of the furandicarboxylic acid starting material. For example, when furandicarboxylic acid dimethyl ester is used, methanol is formed in addition to the prepolymer. During step a) the alkyl alcohol is removed by distillation. The contacting step can be performed at atmospheric pressure or, in other embodiments, at slightly elevated or reduced pressure. The contacting step is performed at a temperature in the range of from 140°C to 220°C, for example in the range of from 150 °C to 215 °C or from 170°C to 215°C or from 180°C to 210°C or from 190°C to 210°C. The time is typically from one hour to several hours, for example 2, 3, 4, or 5 hours or any time in between 1 hour and 5 hours.

After step a) (the transesterification step), the prepolymer undergoes catalyzed polycondensation to form the poly(alkylene furandicarboxylate polymer. In the processes disclosed herein, this is step b) performing polycondensation by heating the prepolymer under reduced pressure to a temperature in the range of from 220°C to 260°C to form the poly(alkylene furandicarboxylate) polymer. The catalyst in step b) can be selected from the same metal catalysts described for step b), and can be the same as or different from that used in step a). A different catalyst, or more of the same catalyst

used in step a), can be added in step b). Byproduct diol is removed during the polycondensation step. The temperature is typically in the range of from 220°C to 260°C, for example from 225°C to 255°C or from 230°C to 250°C. The pressure can be from less than about one atmosphere to 0.0001 atmospheres. In this step, the prepolymer undergoes polycondensation reactions, increasing the molecular weight of the polymer (as indicated by the increase in the torque of the motor at the given speed as the viscosity of the mixture increases with time) and liberating diol. The polycondensation step can be continued at a temperature in the range of from 220°C to 260°C for such a time as the intrinsic viscosity of the polymer reaches at least about 0.6 dL/g, or the number average molecular weight of the polymer reaches at least 12,000 g/mole The time is typically from 1 hour to several hours, for example 2, 3, 4, 5, 6, 7, 8, 9 or 10 hours or any time in between 1 hour and 10 hours. In one embodiment, the polymer obtained from step b) has an intrinsic viscosity of at least 0.60 dL/g. Once the desired intrinsic viscosity of the polymer is reached, the reactor and its contents can be cooled, for example to room temperature, to obtain the poly(alkylene furandicarboxylate) polymer.

The processes disclosed herein also comprise a step c) independently adding to step a) and/or step b) at least one anthraquinone compound represented by Structure A:

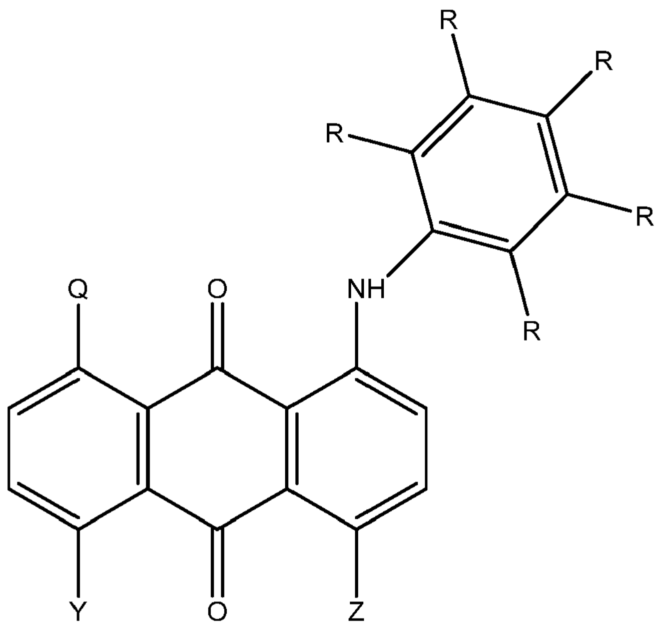

Structure A,

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', where R' is a cyclohexyl or substituted aryl group. The substituted aryl group is selected from a group consisting of H, OH, $C_1$-$C_6$ alkyl, $NHCOCH_3$, and $SO_2NHC_6H_{11}$.

The step of adding the anthraquinone compound can be performed in conjunction with the step of contacting the mixture comprising furandicarboxylic acid dialkyl ester, a diol comprising ethylene glycol, 1,3-propanediol, 1,4-butanediol, 1,4-cyclohexanedimethanol, or mixtures thereof, and a metal catalyst (step a). In one embodiment, the anthraquinone compound is added in step a) contacting the mixture. The step of adding the anthraquinone compound can be performed in conjunction with performing polycondensation by heating the prepolymer under reduced pressure to a temperature in the range of from about 220 °C to about 260 °C to form poly(alkylene furandicarboxylate) polymer (step b). In one embodiment, the anthraquinone compound is added in step b) performing polycondensation. In one embodiment, the anthraquinone compound can be added in both step a) contacting the mixture and also step b) performing polycondensation.

One or more anthraquinone compounds can be present in an amount in the range of from about 1 ppm to about 20 ppm, based on the total weight of the polymer. For example, the anthraquinone can be present in the mixture of step a) or the prepolymer of step c) at 1 ppm, 2 ppm, 3 ppm, 4 ppm, 5 ppm, 6 ppm, 7 ppm, 8 ppm, 9 ppm, 10 ppm, 11 ppm, 12 ppm, 13 ppm, 14 ppm, 15 ppm, 16 ppm, 17 ppm, 18 ppm, 19 ppm, or 20 ppm (or any amount between two of these values).

Useful anthraquinone compounds can be obtained commercially. Preferably the anthraquinone compounds

are thermally stable, soluble in poly(alkylene furandicarboxylate) polymer, and are free from halogens. Examples of anthraquinone compounds represented by Structure A include the following:

Solvent blue 104, also known as 1,4-bis(mesitylamino)anthraquinone or 1,4-bis[(2,4,6-trimethylphenyl)amino] anthracene, which has the following structure:

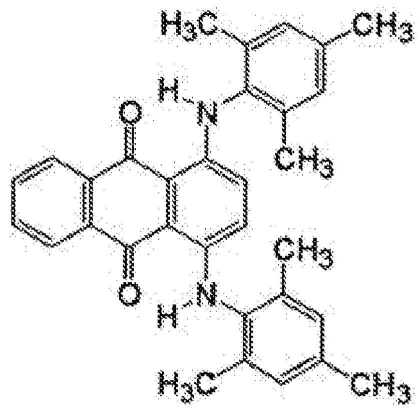

Solvent blue 45, also known as 4,4'-(1,4-anthraquinonylenediimino) bis[N-cyclohexyl-2-mesitylenesulfonamide], which has the following structure:

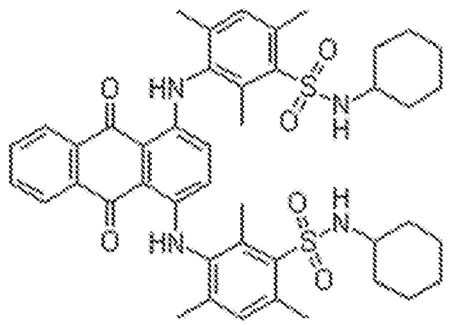

Solvent blue 97, also known as 1,4-bis[(2,6-diethyl-4-methylphenyl) amino]anthracene-9,10-dione, which has the following structure:

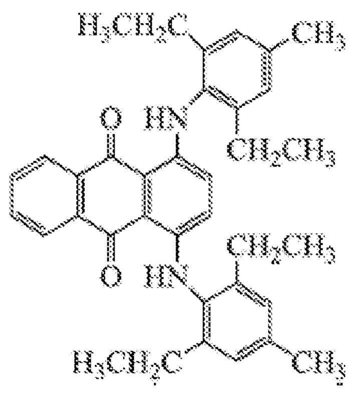

Solvent blue, also known as 1,4-bis[(4-n-butylphenyl)amino anthracene-9,10-dione, which has the following structure:

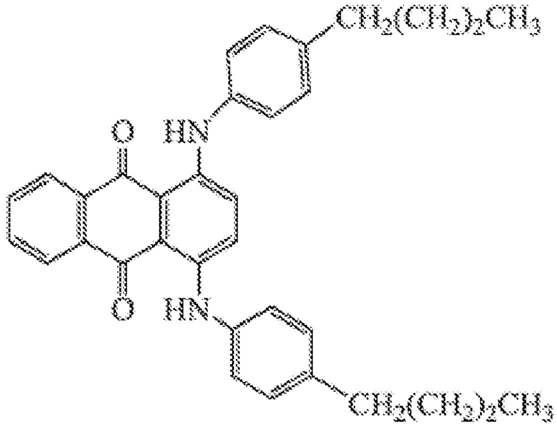

Solvent blue 122, also known as N-(4-((9,10-dihydro-4-hydroxy-9,10-dioxo-1-anthryl)amino)phenyl)acetamide, which has the following structure:

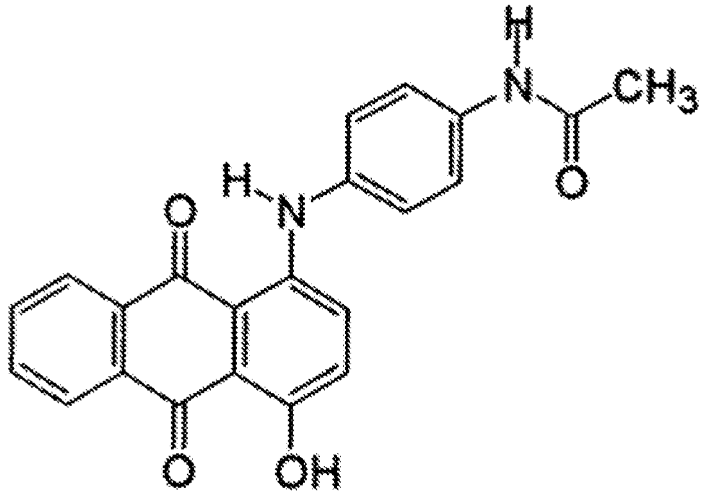

Solvent green 28, also known as 1,4-bis[(4-n-butylphenyl)amino-5,8-dihydroxy]anthracene-9,10-dione, which has the following structure:

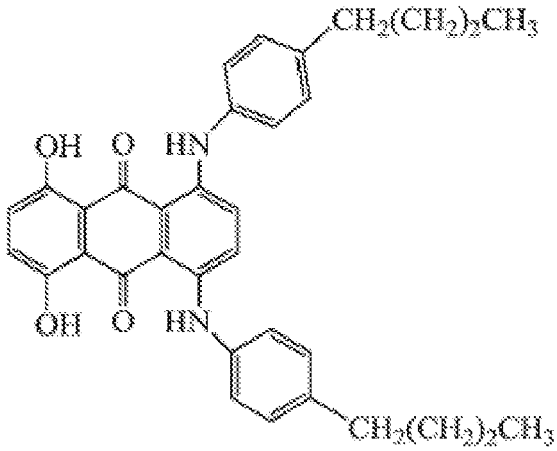

Solvent red 207, also known as 1,5-bis[(3-methylphenyl)amino] antharacene-9,10-dione, which has the following structure:

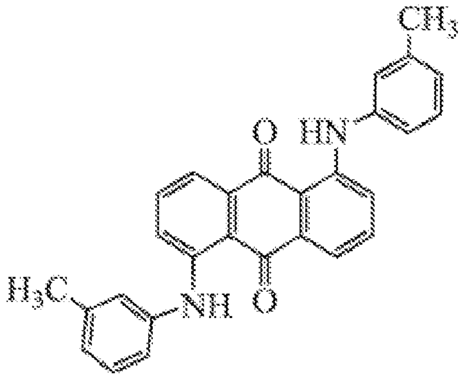

.

The anthraquinone compound can function as a color toner. The color of the polymer can be adjusted using one or two or more anthraquinone compounds. In some embodiments, the poly(trimethylene furandicarboxylate) polymer has a b* color value of less than 10, for example less than 5, as determined by spectrocolorimetry. In some embodiments, the L* color value of the poly(trimethylene furandicarboxylate) is greater than 60, for example greater than 65.

The anthraquinone compound can also function as a co-catalyst, and serves to increase the rate of polycondensation in step c), such that the rate of polycondensation is faster with the anthraquinone compound present than without. Either higher number average molecular weight (or higher intrinsic viscosity) at a given polycondensation time or shorter polycondensation time at a given number average molecular weight of the polymer can be an indication of faster rates. Also, the relative increase in motor torque of the mechanical stirrer with time during polycondensation can be another indication of whether the rate is faster or slower. In general, chemical degradation of polyester resin can occur in melt polymerization at high catalyst loading, high temperature, and long residence time resulting in resin with poor color and quality. At fixed catalyst loading, either high temperature and short residence time or low temperature and long residence time is required to build high molecular weight in the melt. However, both approaches can lead to disadvantages of high color and byproducts or low productivity. As the polycondensation reaction temperatures are much higher than the transesterification temperatures, and as most of the degradation and color generation happens during polycondensation, it is important to minimize the residence time in the polycondensation step to improve the quality of the polymer. The anthraquinone compounds, when added prior to the polycondensation step, allow higher molecular weight to be achieved or reduce the condensation time without sacrificing the polymer quality and productivity.

The process steps a), b) and c) can be conducted in batch, semi-continuous, or continuous melt polymerization reactors. The process can be performed in a batch, semi-continuous, or continuous manner.

Batch polymerization process (esterification, prepolymerization, or polycondensation) encompasses raw materials progressing through a unit operation/unit operations in a step wise fashion to produce an end product. Continuous polymerization process encompasses raw materials progressing through a unit operation/unit operations in a contiguous fashion to produce an end product. A process is considered continuous if material is continuously added to a unit during a reaction and the end product is continuously removed after polymerization. Semi-continuous polymerization process encompasses a process stage that is batch and a process stage that is continuous. For example, the esterification stage to prepare a prepolymer may be carried out batch wise and the subsequent polymerization stage(s) may be carried out continuously.

In another embodiment, the process further comprises the step d) crystallizing the poly(alkylene furandicarboxylate) polymer obtained from step c) at a temperature in the range of from about 110 °C to about 150 °C to obtain crystallized poly(alkylene furandicarboxylate) polymer. Typical crystallization times can be in the range of from about one hour to several hours.

In yet another embodiment, the process can further comprise the step e) polymerizing the crystallized poly(alkylene furandicarboxylate) polymer in the solid state at a temperature 5-25 °C below the melting point of the polymer. This step can be performed to obtain higher molecular weight polymer. Typically, in the solid state polymerization step pellets, granules, chips, or flakes of the crystallized poly(alkylene furandicarboxylate) are subjected for a certain amount of time to elevated temperatures (below the melting point) in a hopper, a tumbling drier, or a vertical tube reactor. In one embodiment, an anthraquinone compound of Structure A as defined herein is added in step e) polymerizing in the solid state. The solid state polymerization rates of poly(alkylene furandicarboxylate) polymers can be faster in the presence of anthraquinone compounds.

In some embodiments, a composition comprising poly(alkylene furandicarboxylate) polymer can also comprise one or more additives such as thermal stabilizers, UV absorbers, antioxidants, nucleating agents, process aides (plasticizers), toners/optical brighteners, oxygen barrier additives, chain extenders, chain terminators, multifunctional branching agents, reheat agents, light blocking agents, or a combination thereof.

Like other polyesters, the properties of the poly(alkylene-2,5-furandicarboxylate) polymer depend on its structure, composition, molecular weight, and crystallinity characteristics, for example. In general, the higher the molecular weight the better the mechanical properties. In the processes disclosed herein for making high molecular weight poly(trimethylene furandicarboxylate), the PTF is prepared in a two stage melt polymerization which includes ester exchange (transesterification), and polycondensation at temperature(s) higher than the melt temperature of the final polymer. After the polycondensation step, the poly(trimethylene furandicarboxylate) polymer can be crystallized, then polymerized if desired in the solid state at a temperature below the melting point of the polymer.

As disclosed herein, PTF polymer having an intrinsic viscosity of at least 0.6 dL/g and/or a number average molecular weight of at least 15,000 g/mole is prepared in a melt polymerization process and without solid state polymerization.

The molecular weight of the PTF polymer can be measured by different techniques, for example proton NMR that provides the number average molecular weight from end group analysis, size exclusion chromatography that provides the number average and weight average molecular weights, and intrinsic viscosity. The intrinsic viscosity of the PTF polymer produced according to the disclosed process can be measured by standard methods, for example as disclosed in the Experimental Section herein below, and can be in the range of from 0.6 to 1.20 dL/g. In other embodiments, the intrinsic viscosity can be in the range of from 0.70 to 1.00 dL/g, or 0.70 to 0.90 dL/g, or 0.70 to 0.80 dL/g. The number average molecular weight ($M_n$) of the PTF polymer produced according to the process of the disclosure can be in the range of from 15,000 to 40,000 g/mole. In other embodiments, the number average molecular weight can be in the range of from 15,000 to 30,000 g/mole or 15,000 to 25,000 g/mole. The weight average molecular weight ($M_w$) of the PTF polymer can be in the range of from 30,000 to 80,000 g/mole, or 30,000 to 70,000 g/mole or 30,000 to 60,000 g/mole.

Differential Scanning Calorimetry (DSC) shows that the PTF polymer prepared using the disclosed melt polymerization process has no melting point when the polymer sample is heated at 10 °C/min, which indicates that the polymer is mostly in the amorphous state. In order to produce a crystallized PTF polymer, the amorphous PTF polymer is heated to the cold crystallization temperature, for example, heating to a temperature in the range of from 100 to 130°C, to obtain a crystallized PTF polymer from which the melting point can be determined. The melting temperature of crystallized PTF polymer depends on the molecular structure of repeat unit I, and the crystallization rate and morphology. As the molecular weight of the PTF polymer increases, the crystallization rate decreases and therefore the melt temperature decreases. The melt temperature ($T_m$) and enthalpy or heat of fusion ($\Delta H_m$) of the formed crystals are measured from heat-cool and heat cycles of DSC. The heat of fusion of the pure crystalline polymer is an important parameter which can be used along with the theoretical heat of melting for 100% crystalline PTF for the estimation of the degree of crystallinity of the polymer. The percent crystallinity is directly related to many of the key properties exhibited by a semi-crystalline polymer including: brittleness, toughness, stiffness or modulus, optical clarity, creep or cold flow, barrier resistance (ability to prevent gas transfer in or out) and long term stability.

The crystallized PTF polymer can have a broad melt temperature range with multiple peaks in DSC when the polymer is heated at 10°C/min whereas a single, narrow peak can be obtained when the polymer is heated at very slow rate, for example 1°C/min. The melting temperature of the major peak of the crystallized PTF polymer is measured from the first heating DSC scan and is in the range from 155 to 185°C, preferably from 165 to 185°C. The glass transition temperature of the polymer is taken in the second heating DSC scan at 10°C/min rate and is within the range of 57 to 62°C.

Physical, mechanical, and optical properties of crystalline PTF are strongly dependent on the morphological features of the polymer, for example, the polymer size, shape, perfection, orientation, and/or volume fraction. Crystallization rates are typically expressed through the use of isothermal crystallization half-time ($t_{1/2}$) values in units of minutes or seconds at a specific temperature and can be obtained from DSC experiments. The isothermal crystallization temperatures are between the glass transition temperature ($T_g$) and melting point ($T_m$) of the PTF polymer and can be measured at various temperatures ranging from 70-160 °C. The subsequent DSC heating traces after isothermal melt crystallization can provide information on the melting behavior of the polymer. The crystallization half-times and the crystallization rates depend on factors such as crystallization temperature, the average molecular weight, molecular weight distribution, the chain structure of the polymer, presence of any comonomer, nucleating agents, and plasticizers. Increasing the molecular weight in the melt polymerization process decreases the crystallization rate, and therefore the polymer as prepared from a melt is mostly amorphous. In general, polymers having a slow crystallization rate find limited use in engineering and packaging applications.

Polyesters prepared from melt polymerization processes are known to comprise cyclic oligomeric esters as an impurity. In case of poly(ethylene terephthalate), the majority of cyclic oligomeric ester is cyclic trimer typically present at levels of 2 to 4% by weight. In contrast, in the case of poly(trimethylene terephthalate) the major species of cyclic oligomeric ester is the cyclic dimer, which can be present in the polymer at 2.5% by weight or more. Cyclic oligomeric ester impurities can be problematic during polymerization, processing, and in end-use applications such as injection molded parts, apparel fibers, filaments, and films. Lowering cyclic oligomeric ester concentrations in the polymer could positively impact polymer production, for example by extended wipe cycle times during fiber spinning, reduced oligomer blooming of injection molded parts, and reduced blushing of films.

One way to reduce the content of the cyclic oligomeric esters in polyesters such as poly(ethylene terephthalate) and poly(trimethylene terephthalate) is by utilizing solid state polymerization. The major cyclic oligoester in PTF polymer is the cyclic dimer. The total amount of cyclic esters, including dimer, in the polymer can be determined from proton NMR analysis as described in the Experimental Section.

The poly(trimethylene furandicarboxylate) polymer can comprise end groups other than hydroxyl groups, for example, allyl, carboxylic acid, decarboxylic acid, alkylester, aldehyde, and di-PDO resulting from thermal or thermo-oxidative degradation of polymer chains, other side reactions during melt polymerization conditions, and impurities in the monomer(s). It is desirable to minimize formation of end groups other than hydroxyl groups.

The polymers obtained by the processes disclosed herein can be formed into films or sheets directly from the polymerization melt. In the alternative, the compositions may be formed into an easily handled shape (such as pellets) from the melt, which may then be used to form a film or sheet. Sheets can be used, for example, for forming signs, glazings (such as in bus stop shelters, sky lights or recreational vehicles), displays, automobile lights, and in thermoforming articles.

The polymers obtained by the processes disclosed herein can be used to make molded articles, which may be prepared by any conventional molding process, such as compression molding, injection molding, extrusion molding, blow molding, injection blow molding, injection stretch blow molding, extrusion blow molding and the like. Articles may also be formed by combinations of two or more of these processes, such as for example when a core formed by compression molding is overmolded by injection molding.

## EXAMPLES

Unless otherwise specifically stated, all ingredients are available from the Sigma-Aldrich Chemical Company, St. Louis, Missouri. Unless otherwise noted, all materials were used as received.

2,5-Furan dicarboxylic dimethyl ester (FDME) was obtained from Sarchem Laboratories Inc, Farmingdale, NJ.

1,3-Propanediol (BioPDO™) was obtained from DuPont Tate & Lyle LLC. The abbreviation "PDO" is used throughout the examples for this ingredient.

Ethylene glycol and Tetra n-butyl titanate (Tyzor® TBT) were obtained from Sigma-Aldrich.

1,4-Bis[(2,4,6-trimethylphenyl)am ino]anthracene-9,10-dione (commercially available as Optica™ global PRT bluetoner in dispersion) and 3H-naphtho[1,2,3-de]quinoline-2,7-dione, 3-methyl-6-[(4-methylphenyl)amino] (commercially available as Optica™ global PRT redtoner dispersion) ) compounds were obtained from ColorMatrix, Berea, OH.

As used herein, "Comp. Ex." Means Comparative Example; "Ex." means Example, "ppm" means parts per million, "g" means gram(s); "kg" means kilogram(s); "mL" means milliliter(s); "min" means minute(s); "h" means hour(s); "mol" means mole(s); "rpm" means revolutions per minute.

## TEST METHODS

### Color Measurement

A Hunterlab COLORQUEST™ Spectrocolorimeter (Reston, Virginia) was used to measure the color. Color is measured in terms of the tristimulus color scale, the CIE L* a* b*: the color value (L*) corresponds to the lightness or darkness of a sample, the color value (a*) on a red-green scale, and the color value (b*) on a yellow-blue scale. The reported color values are in general for the polymers that were crystallized at 110°C for overnight in an oven under vacuum. The calculated yellowness index (YI) values from this instrument are also reported.

### Isothermal crystallization

About 2 to 3 mg PTF specimens were heated from room temperature to 230°C at a heating rate of 30°C/min, held for 3 minutes, and were then cooled at 30°C/min to 0°C to obtain amorphous PTF (quenching in DSC instrument). Quenched specimens were then fast heated to a crystallization temperature of 110°C to 120°C and held there for 2-4 hours. A single heat experiment was then applied to the crystallized specimen to examine the crystallinity.

### Molecular Weight by Size Exclusion Chromatography

A size exclusion chromatography (SEC) system, Alliance 2695™ (Waters Corporation, Milford, MA), was provided with a Waters 2414™ differential refractive index detector, a multi-angle light scattering photometer DAWN Heleos (Wyatt Technologies, Santa Barbara, CA), and a VISCOSTAR II™ differential capillary viscometer detector (Wyatt). The software for data acquisition and reduction was ASTRA® version 6.1 by Wyatt. The columns used were two Shodex GPC HFIP-806M ™ styrene-divinyl benzene columns with an exclusion limit of $2 \times 10^7$ and 8,000/30 cm theoretical

plates; and one Shodex GPC HFIP-804M ™ styrene-divinyl benzene column with an exclusion limit 2 × $10^5$ and 10,000/30cm theoretical plates.

The specimen was dissolved in 1,1,1,3,3,3-hexafluoro-2-propanol (HFIP) containing 0.01 M sodium trifluoroacetate by mixing at room temperature with moderate agitation for four hours followed by filtration through a 0.45 μm PTFE filter. Concentration of the solution was circa 2 mg/mL

Data was taken with the chromatograph set at 35°C, with a flow rate of 0.5 mL/min. The injection volume was 100 μL. The run time was 80 min. Data reduction was performed incorporating data from all three detectors described above. Eight scattering angles were employed with the light scattering detector. No standards for column calibration were involved in the data processing. The weight average molecular weight ($M_w$) of the polymers are reported.

**Molecular Weight by Intrinsic Viscosity**

Intrinsic viscosity (IV) was determined using the Goodyear R-103B Equivalent IV method, using PET T-3, DUPONT™ SELAR® PT-X250, DUPONT™ SORONA® 2864 as calibration standards on a VISCOTEK® Forced Flow Viscometer Model Y-501C. A 60/40 mixture of phenol/1,1,2,2-tetrachloroethane was used as solvent for the polymer. Samples were prepared by adding 0.15 g of resin in 30 mL of solvent mixture and stirred the mixture was heated at 100 °C for 30 minutes, cooled to room temperature for another 30 min and the intrinsic viscosity of the solution was measured.

**Melt flow index (MFI) or Melt flow rate (MFR)**

Melt flow index (MFI) is a measure of how many grams of a polymer flow through a die in ten minutes. The melt flow rates for the dried PTF polymer resins were measured using a melt flow apparatus (Extrusion Plastometer, Tinium Olsen, Willow Grove, PA) at 210 °C with a load of 2160 g according to the ASTM D1238. A correlation between MFR and IV was established for PTF polymer resins of varied molecular weights.

**Number average molecular weight ($M_n$) and end group quantification by $^1$H (proton) NMR**

$^1$H NMR spectra were collected using a 700 MHz NMR on about 55 mg of PTF polymer in 0.7 mL 1,1,2,2-tetrachlorethane-d2 (tce-d2) at 110°C using an acquisition time of 4.68 sec, a 90 degree pulse, and a recycle delay of 30 sec, and with 16 transients averaged. In the case of PEF polymer, about 20 mg of PEF was dissolved in chloroform-d($CDCl_3$)/trifluoroacetic acid-d 80/20 vol/vol.

$^1$H NMR Calculation Methods

Samples were integrated and mole percentage calculated as is standard in the art. The peak assignments for the PTF polymer are shown below in TABLE 1 and for the PEF polymer in Table 2.

**TABLE 1**

| δ (ppm) | Protons/Location | Description |
|---|---|---|
| 7.58 | 1H end group | Decarboxylated furan |
| 7.2 | 2H backbone | Furandicarboxylate |
| 6.89 | 4H | Furandicarboxylate-PDO cylic dimer |
| 4.82 & 5.35-5.45 | 2H, 2H end group | Allylic |
| 4.2 to 4.75 | 2H backbone | Propanediol esterified |
| 3.96 | 3H end group | Methyl ester |
| 3.81 | 4H | Unreacted propanediol |
| 3.75 | 2H end group | Propanediol hydroxyl end |
| 3.62 | 4H backbone | Di-PDO |
| 3.48 | 4H end | Di-PDO |
| 7.55 | 1H | Furanic hydrogen of furancarboxylic acid end (derivatized) |

**TABLE 2**

| δ (ppm) | Protons/Location | Description |
|---|---|---|
| 7.66/6.59 | 1H end group | Decarboxylated furan |
| 7.3-7.4 | 2H backbone | Furandicarboxylate |
| 7.50 | 4H | Furandicarboxylate-EG cylic trimer |
| 4.55 -5.0 | 2H backbone | Ethylene glycol esterified |
| 4.04 | 3H end group | Methyl ester |
| 4.00 | 4H | Unreacted ethylene glycol |
| 4.17 | 2H end group | Ethylene glycol hydroxyl end |
| 4.10 | 4H backbone | DEG |
| 7.55 | 1H | Furanic hydrogen of furancarboxylic acid end (derivatized) |

**Method for Determining Total Amount of Cyclic Dimer Esters in Poly(trimethylene-2,5-furandicarboxylate) by $^1$H NMR**

As shown in Table 1, furan ring hydrogens of cyclic dimer (δ 6.89) and furan ring hydrogens of PTF polymer (δ 7.2) have different chemical shifts. The weight percent of cyclic dimer was calculated using the following equations:

$$Molecular\ wt\ of\ cyclic\ dimer = \frac{\boldsymbol{nI}\ of\ furan\ ring\ hydrogens\ of\ cyclic\ dimer\ * 392}{sum\ of\ \boldsymbol{nI}\ of\ polymer\ ends}$$

$$Cyclic\ dimer\ wt\ \% = \frac{Molecular\ wt\ of\ cyclic\ dimer\ \ * 100}{sum\ of\ molecular\ weights\ of\ polymer\ and\ cyclic\ dimer}$$

***nI*** *= Normalized integral value*

**Examples 1a, 2a, and 3a Preparation of Polytrimethylene-2,5-furandicarboxylate (PTF)**

**Polymers With Anthraquinones**

The following amounts of the ingredients were charged into a 3L three-neck glass reactor fitted with a nitrogen inlet, a condenser, and a mechanical stirrer: 2,5-furandicarboxylate dimethyl ester (1.41 kg, 7.64 mol) and 1,3-propanediol (0.873 kg, 11.47 mol). The mole ratio of PDO to FDME was 1.5. The flask was placed in a metal bath which was preheated to a set temperature 160 °C. The reaction mixture was stirred using Ekato Paravisc impeller at 100 rpm for 10 minutes to obtain homogeneous solution under nitrogen atmosphere. Tetra n-butyltitanate (1.066 g; 100 ppm of titanium based on weight of the polymer) was added to the mixture at this set temperature. The metal bath temperature was raised to 190 °C to initiate transesterification reaction and the first drop of the condensed distillate collected was noted as the start of the reaction (time zero). The reaction was continued at this temperature for 1 h, the temperature was raised to 200 °C and the reaction was continued for another hour. By this time most of the distillate (~600 mL) was collected and the distillate rate was slowed down at this point indicating the reaction is almost complete.

At this stage, the anthraquinone compounds (PRT blue and PRT red ) with varied amounts (see Table 3) were added as liquid dispersion to the reaction mixture. A vacuum ramp was started while stopping the nitrogen purge. Pressure was gradually decreased from atmospheric to a final low pressure of 0.2 mm Hg to 0.4 mm Hg absolute over a period of 1 to 1.5 h and during this time most of the excess 1,3-propanediol was collected in a trap. The temperature of the metal bath was raised to 240 °C and the polycondensation reaction was continued under these conditions for 2-4 hours. During this time, the raise in motor torque was monitored as the molecular weight of the polymer builds up, and the mixing speed was reduced gradually. Whenever the torque value in milli volts (mV) reached at 60mV, the stirring

speed was reduced from 100 to 80, then to 60, then to 40, and then to 20 rpm. When there was no rapid increase in torque value observed at 20 rpm, the reaction was terminated by increasing the pressure to atmospheric pressure under nitrogen flow and removing the glass kettle from the metal bath. The kettle was cooled to room temperature and the solid polymer from the kettle was recovered.

The recovered polymer was dried and crystallized at 110-120 °C overnight in vacuum oven. The properties of the final polymers are reported in Table 3.

**Comparative Example A**

PTF polymer was prepared as described in the Examples above except no anthraquinone compounds were added. Results are presented in Table 3.

**TABLE 3**

| | Comp Ex A | Ex 1a | Ex 2a | Ex 3a |
|---|---|---|---|---|
| Process conditions | | | | |
| Transesterification<br>Set Temp, °C<br>Time, min | <br>190-210<br>140 | <br>190-200<br>120 | <br>190-200<br>120 | <br>190-200<br>120 |
| PRTBlue, ppm<br>PRT Red, ppm | None<br>None | 10<br>5 | 7<br>5 | 7<br>0 |
| Polycondensation<br>Set Temp, °C<br>Pressure, mm Hg<br>Time, min | <br>240 °C<br>-0.2<br>225 | <br>240 °C<br>-0.2<br>220 | <br>240 °C<br>-0.2<br>165 | <br>240 °C<br>-0.2<br>148 |
| Properties | | | | |
| Mn (NMR) | 15080 | 17470 | 15120 | 15610 |
| $T_{1/2}$, min<br>Tg, °C<br>Tm, °C<br>ΔH, J/q | 27<br>60.4<br>174<br>43.2 | 29<br>60.6<br>174<br>44.7 | 22<br>60.2<br>175<br>47.3 | 26<br>60.3<br>174<br>47.3 |
| End groups, meq/kg<br>Hydroxyls<br>Carboxylics<br>Allyl<br>Methyl<br>Decarboxyl | <br>123<br>6.1<br>9<br>9<br>3 | <br>104<br>5.6<br>9<br>12<br>0.7 | <br>121<br>4.6<br>10<br>11<br>0 | <br>119<br>4.0<br>7<br>14<br>0 |
| Di-PDO, wt% | 0.4 | 0.2 | 0.2 | 0.2 |
| Cyclic dimer, wt% | 0.4 | 0.4 | 0.4 | 0.4 |
| Polymer color<br>L*<br>a*<br>b*<br>YI | <br>76.3<br>0.2<br>15.0<br>27 | <br>69.3<br>-3.0<br>-2.1<br>-8.5 | <br>70.6<br>-2.5<br>3.1<br>5.0 | <br>72.1<br>-6.9<br>4.8<br>4.7 |

The data in Table 3 indicates that the combination of anthraquinone-based blue and red colorants at 7-15 ppm level reduced or eliminated the undesirable yellowness of the PTF polymer. Both the b* and YI (yellowness index) values of the PTF polymers (Examples 1a, 2a, and 3a) containing anthraquinone compounds are lower than the PTF polymer not having any anthraquinone compounds (Comp Ex A). Without the red dye, the polymer in Example 3a is more greenish (more negative a* value) and the greenish shade decreased with increased red dye (Example 1a and 2a). The polymer resin prepared as described in Example 1a that contained both PRT blue (10 ppm) and PRT red dye (5 ppm) surprisingly

has higher number average molecular weight suggesting faster polycondensation rate and has very little decarboxyl end groups suggesting less degradation compared to the resin that has no anthraquinone compounds (Comparative Example A). It appears that these anthraquinone compounds are functioning as co-catalysts and/or stabilizers. The performance of these anthraquinone compounds was tested by deliberately reducing the polycondensation time by 60 min in Example 2a and 77 min in Example 3a compared to Comparative Example A. There was no meaningful change in number average molecular weight of these two polymers when compared to the polymer obtained in Comparative Example A, confirming the polycondensation rates are indeed faster, for the polymer resins containing anthraquinone compounds. Absence of decarboxyl end groups in these polymers suggests superior stability of these resins under these conditions. Further comparison of the number average molecular weights of the polymer resins of Examples 2a and 3a indicate that the blue dye, with and without red dye, seems to be very effective in enhancing the polycondensation rate and stabilizing the melt polymer.

The crystallization half time ($T_{1/2}$) of the resins containing anthraquinone compounds are very similar to those for the resin that do not contain these compounds suggesting that there is no impact of anthraquinone compounds presence in the resins on the crystallization rate. The melt enthalpy ($\Delta H$) values are slightly higher for the resins that contain anthraquinone compounds suggesting higher degree of crystallization.

**Examples 1b, 2b, and 3c**

**Solid State Polymerization of PTF With Anthraquinones Comparative Example B**

**Solid State Polymerization of PTF Without Anthraquinone**

The polymers described above were dried and crystallized at 110 °C for overnight in a vacuum oven. The dried and crystallized polymer samples (50 g each) were subsequently polymerized at 165 °C (below the melt temperature of the PTF polymer) for 12 h and 24 h in a vacuum oven under nitrogen gas flow. The melt flow rates were measured for the solid state polymerized samples at 210 °C and are reported in Table 4. The reported IV values in Table 4 were estimated from the correlation established between MFR and IV using PTF polymers of various molecular weights. The SSP rates were calculated by subtracting the IV values of 12 and 24 h from 0 hours and divided by the number of hours and are reported in Table 4.

Example 1b used the polymer obtained in Example 1a, after it was dried and crystallized. Example 2b used the polymer obtained in Example 2a, after it was dried and crystallized. Example 3b used the polymer obtained in Example 3a, after it was dried and crystallized. Comparative Example B used the polymer obtained in Comparative Example A, after it was dried and crystallized.

**Table 4**

| | Comp Ex B | Ex 1b | Ex 2b | Ex 3b |
|---|---|---|---|---|
| MFR, g/10 min | | | | |
| 0 h | 16.07 | 12.2 | 17.2 | 17.4 |
| 12 h | 6.15 | 4.53 | 7.73 | 6.65 |
| 24 h | 4.64 | 1.44 | 2.84 | 2.63 |
| IV, dL/g | | | | |
| 0 h | 0.71 | 0.75 | 0.70 | 0.70 |
| 12 h | 0.87 | 0.92 | 0.83 | 0.85 |
| 24 h | 0.92 | 1.25 | 1.02 | 1.04 |
| SSP rate/hour for initial 12h | 0.0133 | 0.0147 | 0.0108 | 0.0132 |
| SSP rate/hour for later 12h | 0.0042 | 0.0275 | 0.0158 | 0.0158 |
| SSP rate/hour for total 24h | 0.0089 | 0.0210 | 0.0135 | 0.0143 |

In general, the solid state polymerization (SSP) temperature is one of the key factors that dictates the polycondensation rates and these rates are slower for furan dicarboxylate based polyesters compared to terephthalic acid based polyesters because the melt temperatures of the furandicarboxylate based polymers are lower than the terephthalic acid based polyesters. For example, commercially available poly(trimethylene terephthalate) polymer has a melt temperature of 235 °C, whereas the PTF polymer has a melt temperature of 174 °C. In addition to this, it is clear from the data in Table 4 that the SSP rate was significantly slowed for the PTF polymer of Comparative Example B) for the last 12 h compared to the initial 12 h, suggesting that the thermal degradation of polymer may also play a major role in SSP

rate besides the mass transfer limitations. Surprisingly, for the polymer resins of Examples 1b, 2b, and 3b, all containing anthraquinone compounds when polymerized in the solid state, the rates were higher for the second 12 hours compared to the initial 12 hours. This observation is opposite that for the polymer containing no anthraquinone compounds (Comparative Example B). The higher SSP rates could be again due to the anthraquinone compounds functioning as co-catalysts and/or thermal stabilizers for these furandicarboxylate-based polyesters. Higher levels of anthraquinone compounds (15 ppm in Example 1b) has resulted in higher IV (1.25dL/g). Once again, the blue dye seems to be more active than the red dye in enhancing the SSP rates. These results suggest that the furan based polyester resins could be manufactured with higher productivity and post processed at higher temperatures with minimal degradation and/or discoloration.

**Example 4**

**Preparation of Poly(ethylene-2,5-furandicarboxylate (PEF) polymer with Anthraquinone**

**Comparative Example C Preparation of Poly(ethylene-2,5-furandicarboxylate (PEF) polymer without Anthraquinone**

The following amounts of the ingredients were charged into a 1L round bottomed three-neck glass reactor fitted with a nitrogen inlet, a condenser, and a mechanical stirrer: 2,5-furandicarboxylate dimethyl ester (300 g; 1.629 moles), ethylene glycol (223 g; 3.59 moles) and TBT catalyst (0.207 g, 100 ppm of titanium based on weight of the polymer). The mole ratio of ethylene glycol to FDME was 2.2. The flask was placed in a metal bath which was preheated to a set temperature 180 °C. The reaction was conducted at this temperature for 60 min while stirring the mixture at 100 rpm. Subsequently the reaction was conducted for 60 min at 190 °C, 30 min at 200 °C and 30 min at 210 °C. By this time most of the distillate was collected and the distillate rate was slowed down at this point indicating the reaction is almost complete.

At this stage, the anthraquinone compound, PRT blue (0.22 g of 1.0 wt% in ethylene glycol; 7 ppm based on weight of the polymer) was added to the reaction mixture. A vacuum ramp was started while stopping the nitrogen purge at 210 °C. Pressure was gradually decreased from atmospheric to a final low pressure of 0.2 mm Hg to 0.4 mm Hg absolute over a period of 45 min and during this time most of the ethylene glycol that generated was collected in a trap. The temperature of the metal bath was raised to 240 °C over a period of 15 min and the polycondensation reaction was continued under these conditions for 3 hours. The reaction was terminated by increasing the pressure to atmospheric pressure under nitrogen flow and removing the flask from the metal bath. The flash was cooled to room temperature and the solid polymer from the flask was recovered and analyzed. The number average molecular weight of the PEF polymer from NMR end group analysis was found to be 15090 g/mole.

The PEF polymer was prepared exactly as described in Example 4 without adding the anthraquinone compound while maintaining the same process conditions. The number average molecular weight of the resulting polymer was found to be 8900 g/mole.

The higher number average molecular weight of the PEF polymer obtained in Example 4 and the lower molecular weight obtained in Comparative Example C clearly demonstrated the effectiveness of anthraquinone compound as a co-catalyst and/or stabilizer.

The following numbered clauses contain further statements of various aspects of the present invention:

1. A process comprising the steps:

   a) contacting a mixture comprising furandicarboxylic acid dialkyl ester, a diol comprising ethylene glycol, 1,3-propanediol, 1,4-butanediol, 1,4-cyclohexanedimethanol, or mixtures thereof, and a metal catalyst at a temperature in the range of from about 140°C to about 220°C to form prepolymer,
   wherein the mole ratio of the furandicarboxylic acid dialkyl ester to the diol is in the range of from 1:1.3 to 1:2.2;
   b) performing polycondensation by heating the prepolymer under reduced pressure to a temperature in the range of from about 220°C to about 260°C to form poly(alkylene furandicarboxylate) polymer;
   wherein the rate of polycondensation in step c) is faster with the anthraquinone compound present than without; and
   c) independently adding to step a) and/or step b) at least one anthraquinone compound represented by Structure A

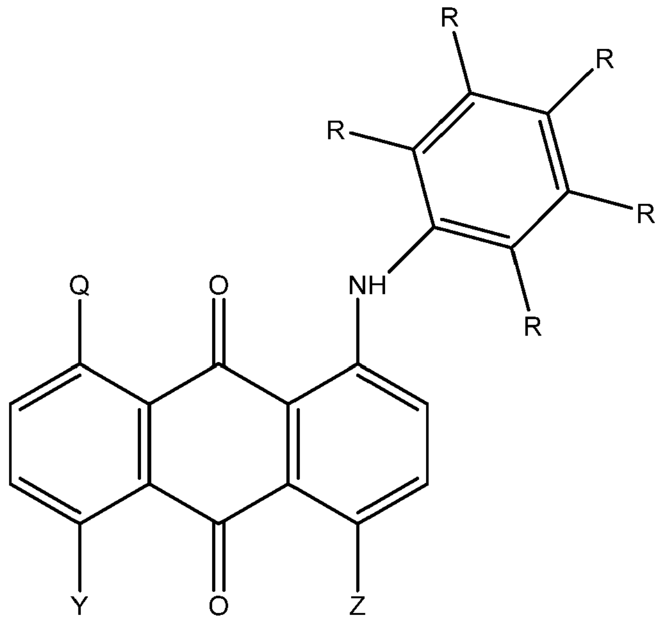

Structure A

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', wherein R' is cyclohexyl or substituted aryl.

2. The process of clause 1, wherein the furandicarboxylic acid dialkyl ester is 2,5-furandicarboxylate dimethyl ester.

3. The process of clause 1, wherein the diol is 1,3-propanediol and the poly(alkylene furandicarboxylate) polymer is poly(trimethylene furandicarboxylate).

4. The process of clause 1, wherein the diol is ethylene glycol and the poly(alkylene furandicarboxylate) polymer is polyethylene furandicarboxylate).

5. The process of clause 1, wherein the diol is 1,4-butanediol and the poly(alkylene furandicarboxylate) polymer is poly(butylene furandicarboxylate).

6. The process of clause 1, wherein the metal catalyst comprises at least one titanium, bismuth, zirconium, tin, antimony, germanium, aluminum, cobalt, magnesium, or manganese compound.

7. The process of clause 1, wherein the metal catalyst is present in the mixture in a concentration in the range of from about 20 ppm to about 300 ppm, based on the total weight of the polymer.

8. The process of clause 1, wherein the anthraquinone compound is present in the mixture in a concentration in the range of from about 1 ppm to about 20 ppm, based on the total weight of the polymer.

9. The process of clause 1, wherein the anthraquinone compound is present in the prepolymer in a concentration in the range of from about 1 ppm to about 20 ppm, based on the total weight of the polymer.

10. The process of clause 1, wherein the anthraquinone compound is 1,4-bis[(2,4,6-trimethylphenyl)amino]anthracene-9,10-dione.

11. The process of clause1, further comprising the step:
d) crystallizing the poly(alkylene furandicarboxylate) polymer obtained from step c) at a temperature in the range of from about 100 °C to about 150 °C to obtain crystallized poly(alkylene furandicarboxylate) polymer.

12. The process of clause 11, further comprising the step:
e) polymerizing the crystallized poly(alkylene furandicarboxylate) polymer in the solid state at a temperature 5-25 °C below the melting point of the polymer.

13. The process of clause 12, wherein an anthraquinone compound of Structure A is added in step e) polymerizing in the solid state.

14. The process of clause 13, wherein the solid state polymerization rate in step e) is faster with the anthraquinone compound present than without.

15. The process of clause 1, wherein the process is batch, semi-continuous, or continuous.

16. A poly(trimethylene furandicarboxylate) obtained by the process of clause 3.

17. A poly(ethylene furandicarboxylate) obtained by the process of clause 4.

18. A poly(butylene furandicarboxylate) obtained by the process of clause 5.

## Claims

**1.** A process comprising the steps:

a) contacting a mixture comprising furandicarboxylic acid dialkyl ester, a diol comprising ethylene glycol, 1,3-propanediol, 1,4-butanediol, 1,4-cyclohexanedimethanol, or mixtures thereof, and a metal catalyst at a temperature in the range of from about 140°C to about 220°C to form prepolymer,
wherein the mole ratio of the furandicarboxylic acid dialkyl ester to the diol is in the range of from 1:1.3 to 1:2.2;
b) performing polycondensation by heating the prepolymer under reduced pressure to a temperature in the range of from about 220°C to about 260°C to form poly(alkylene furandicarboxylate) polymer;
c) independently adding to step a) and/or step b) at least one anthraquinone compound represented by Structure A

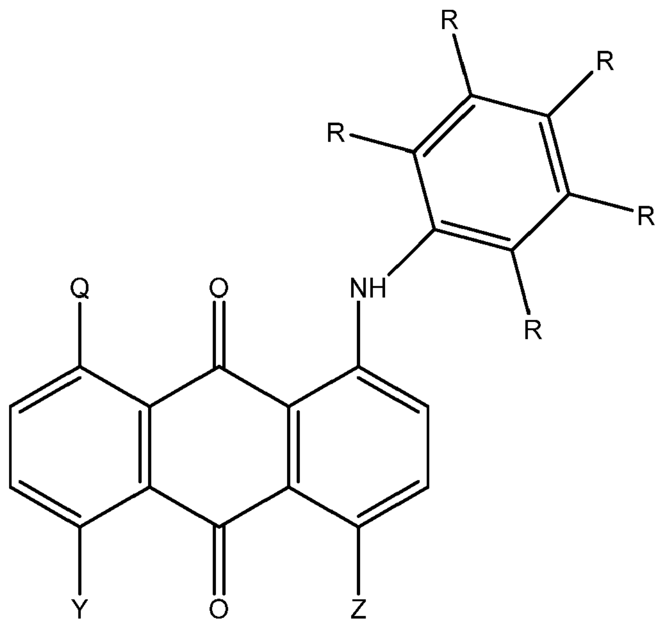

Structure A

wherein each R is independently selected from the group consisting of H, OH, $C_1$-$C_6$ alkyl, $NHCOCH_3$,

$SO_2NHC_6H_{11}$, and each Q, Y, and Z is independently selected from H, OH, $NH_2$, and NHR', wherein R' is cyclohexyl or substituted aryl
wherein the rate of polycondensation in step c) is faster with the anthraquinone compound present than without.

**2.** The process of claim 1, wherein the furandicarboxylic acid dialkyl ester is 2,5-furandicarboxylate dimethyl ester.

**3.** The process of claim 1, wherein the diol is 1,3-propanediol and the poly(alkylene furandicarboxylate) polymer is poly(trimethylene furandicarboxylate).

**4.** The process of claim 1, wherein the diol is ethylene glycol and the poly(alkylene furandicarboxylate) polymer is polyethylene furandicarboxylate).

**5.** The process of claim 1, wherein the diol is 1,4-butanediol and the poly(alkylene furandicarboxylate) polymer is poly(butylene furandicarboxylate).

**6.** The process of claim 1, wherein the metal catalyst comprises at least one titanium, bismuth, zirconium, tin, antimony, germanium, aluminum, cobalt, magnesium, or manganese compound, and/or wherein the metal catalyst is present in the mixture in a concentration in the range of from about 20 ppm to about 300 ppm, based on the total weight of the polymer.

**7.** The process of claim 1, wherein the anthraquinone compound is present in the mixture and/or prepolymer in a concentration in the range of from about 1 ppm to about 20 ppm, based on the total weight of the polymer.

**8.** The process of claim 1, wherein the anthraquinone compound is 1,4-bis[(2,4,6-trimethylphenyl)amino]anthracene-9,10-dione.

**9.** The process of claim 1, further comprising the step:
d) crystallizing the poly(alkylene furandicarboxylate) polymer obtained from step c) at a temperature in the range of from about 100 °C to about 150 °C to obtain crystallized poly(alkylene furandicarboxylate) polymer.

**10.** The process of claim 11, further comprising the step:
e) polymerizing the crystallized poly(alkylene furandicarboxylate) polymer in the solid state at a temperature 5-25 °C below the melting point of the polymer, optionally wherein an anthraquinone compound of Structure A is added in step e) polymerizing in the solid state, preferably such that the solid state polymerization rate in step e) is faster with the anthraquinone compound present than without.

**11.** The process of claim 1, wherein the process is batch, semi-continuous, or continuous.

**12.** A poly(trimethylene furandicarboxylate) obtained by the process of claim 3.

**13.** A polyethylene furandicarboxylate) obtained by the process of claim 4.

**14.** A poly(butylene furandicarboxylate) obtained by the process of claim 5.

**15.** Use of an at least one anthraquinone compound represented by Structure A

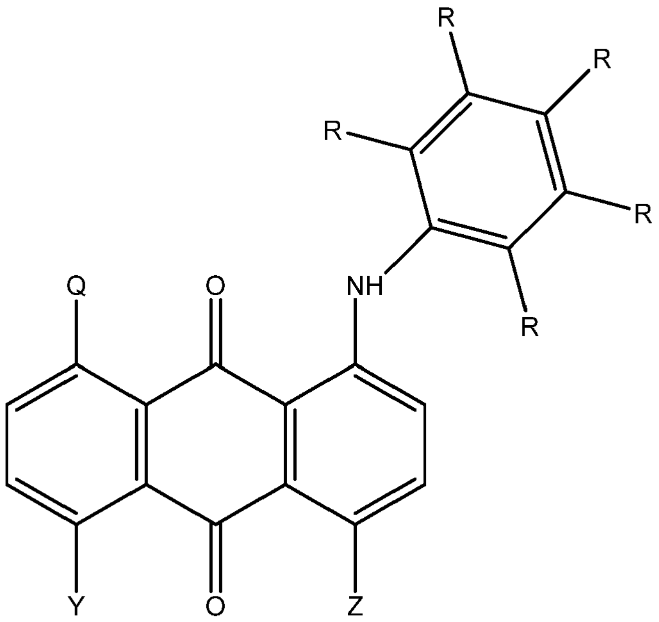

Structure A

wherein R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', wherein R' is cyclohexyl or substituted aryl,

to increase the rate of polycondensation of a prepolymer formed from a furandicarboxylic acid dialkyl ester and a diol comprising ethylene glycol, 1,3-propanediol, 1,4-butanediol, 1,4-cyclohexanedimethanol.

Europäisches Patentamt
European Patent Office
Office européen des brevets

# EUROPEAN SEARCH REPORT

Application Number
EP 23 18 3666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 567 431 B2 (SIPOS LASZLO [NL]; FURANIX TECHNOLOGIES BV [NL]) 14 February 2017 (2017-02-14)<br>* column 1, lines 18-23 *<br>* column 4, lines 38-50 *<br>* column 5, lines 32-41; example 1 *<br>----- | 1-15 | INV.<br>C08G63/181<br>C08G63/668<br>C08G63/672<br>C08G63/85 |
| A | US 5 744 571 A (HILBERT SAMUEL D [US] ET AL) 28 April 1998 (1998-04-28)<br>* column 2, lines 31-35 *<br>* claim 14 *<br>----- | 1-15 | |
| | | | TECHNICAL FIELDS SEARCHED (IPC) |
| | | | C08G |

The present search report has been drawn up for all claims

1

| Place of search | Date of completion of the search | Examiner |
|---|---|---|
| The Hague | 9 October 2023 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 18 3666

This annex lists the patent family members relating to the patent documents cited in the above-mentioned European search report. The members are as contained in the European Patent Office EDP file on
The European Patent Office is in no way liable for these particulars which are merely given for the purpose of information.

09-10-2023

| Patent document cited in search report | Publication date | Patent family member(s) | Publication date |
|---|---|---|---|
| US 9567431 B2 | 14-02-2017 | EP 2370496 A1 | 05-10-2011 |
| | | ES 2820341 T3 | 20-04-2021 |
| | | NL 2002382 C2 | 01-07-2010 |
| | | US 2011282020 A1 | 17-11-2011 |
| | | US 2016312008 A1 | 27-10-2016 |
| | | WO 2010077133 A1 | 08-07-2010 |
| US 5744571 A | 28-04-1998 | AT E217329 T1 | 15-05-2002 |
| | | AU 4520796 A | 10-07-1996 |
| | | BR 9506851 A | 07-10-1997 |
| | | CA 2183343 A1 | 27-06-1996 |
| | | CN 1147824 A | 16-04-1997 |
| | | CO 4440666 A1 | 07-05-1997 |
| | | DE 69526650 T2 | 12-09-2002 |
| | | EP 0746581 A1 | 11-12-1996 |
| | | ES 2173214 T3 | 16-10-2002 |
| | | JP H10513204 A | 15-12-1998 |
| | | KR 970701220 A | 17-03-1997 |
| | | TW 354305 B | 11-03-1999 |
| | | US 5744571 A | 28-04-1998 |
| | | US 5886133 A | 23-03-1999 |
| | | WO 9619520 A1 | 27-06-1996 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62462950